# EUROPEAN PATENT SPECIFICATION

(11) **EP 2 843 636 B1**
(45) Date of publication and mention of the grant of the patent: **13.06.2018**
(21) Application number: 14181557.1
(22) Date of filing: 20.08.2014
(51) Int. Cl.: G08B 25/00, G08B 29/14

(54) **Monitoring and control of alarm systems**
Überwachung und Steuerung von Alarmsystemen
Surveillance et commande de systèmes d'alarme

(30) Priority: 23.08.2013 EP 13181558
(43) Date of publication of application: 04.03.2015
(73) Proprietor: E.I. Technology, Shannon, Co. Clare (IE)
(72) Inventor: Byrne, Michael, Limerick, (IE); Mccollum, Niall, County Clare, (IE); Flynn, Fergus, County Clare, (IE); O'Shea, Daniel, County Cork, (IE); Keating, David, County Limerick, (IE)
(74) Representative: Weldon, Michael James

(56) References cited:
- EP-A2- 1 845 499
- EP-A2- 1 973 077
- EP-A2- 2 581 891
- GB-A- 2 466 546
- JP-A- 2009 199 508
- US-A1- 2007 028 304
- US-A1- 2007 096 901
- US-A1- 2008 084 291
- US-A1- 2008 197 204

## Description

### Introduction

The invention relates to alarm systems such as those described in our prior published specifications nos. EP2581891, EP2575114, EP1501060, EP1906371 and EP1903523.

JP2010033516 (Hochiki Corp.) describes a controller for terminal devices such as house alarm devices. The controller can send a radio signal to the devices to cause them to output an alarm. WO2005001664 (Honeywell) describes dual site supervision, in which a transceiver monitors and tests through more than one cell base station or site. US5650770 (Schlager) describes a monitoring base station in two-way communication with sensing units.

EP1845499 describes a service tool communicating with a computer and a control panel linked to alarm devices.

There have been significant developments in the RF communication technology for devices-to-devices and devices-to-controllers. However there is still a need for improvement in monitoring of the devices so that they are adequately maintained in a state of readiness.

Also, known systems require a "panel" controller which is in constant communication with a number of devices, receiving event data. This is however, complex and expensive.

### Summary of the Invention

According to the invention, there is provided an alarm device monitoring and control tool comprising a processor, and a radiation transceiver as set out in claim 1.

In one embodiment, the processor is adapted to maintain a map of alarm group device locations and identifiers, and to generate a display map with an interface to allow the user to select status data to access, and wherein the processor is adapted to output an alarm group snapshot status summary.

In one embodiment, the processor is adapted to perform iterative downloading of data from each of said devices, and to recognise as a first message from a device a message sent upon user testing of the device.

In one embodiment, the tool comprises a portable computer and an insertable dongle with the radiation transceiver.

In one embodiment, the processor is adapted to generate and send user notifications arising from said event data processing, through a medium such as SMS or email, and wherein the processor is adapted to respond to interrogation signals from a remote host system to upload data concerning fault conditions and early warning flags such as predictive maintenance warnings.

In one embodiment, the tool is adapted to process both the event data received from devices and radiation signals which it directly senses to provide an input of integrity of device-to-device communication.

In another aspect, the invention provides an alarm device group monitoring method as set out in claim 7. According to the invention, the method further comprises the step of the monitoring tool sampling radiation signals in a frequency band used by the devices, and processing data representing said signals to act as an interference meter by measuring electrical noise in a reception band or bands being used by the alarm devices and comparing it with signal strength data in said event data.

### Detailed Description of the Invention

The invention will be more clearly understood from the following description of some embodiments thereof, given by way of example only with reference to the accompanying drawings in which:-
Fig. 1 is a block diagram of a portable alarm controller interface, Fig. 2 is a block diagram showing an alarm head and RF module, and Fig. 3 is a diagram showing an overall system with a controller and multiple devices each having an alarm head and an RF module;
Fig. 4 is a sample launch panel screen for the portable controller;
Fig. 5 is another sample screen, showing representation of device parameters such as RSSI levels;
Fig. 6 is a sample screen showing an event log;
Fig. 7 is a system set-up flow chart;
Fig. 8 shows a sample display screen of the controller, a status summary;
Fig. 9 is a sample display event log;
Fig. 10 is a sample RF report;
Fig. 11 is a diagram illustrating differences in signal margins between devices in a network, which differences can be detected and outputted by a controller of the invention; and
Figs. 12 and 13 are plots showing interference detection by the monitoring and control tool, I which an interference/base line is shown as a continuous trace and bone fide RF messages, are shown as dotted line, on a time horizontal axis.

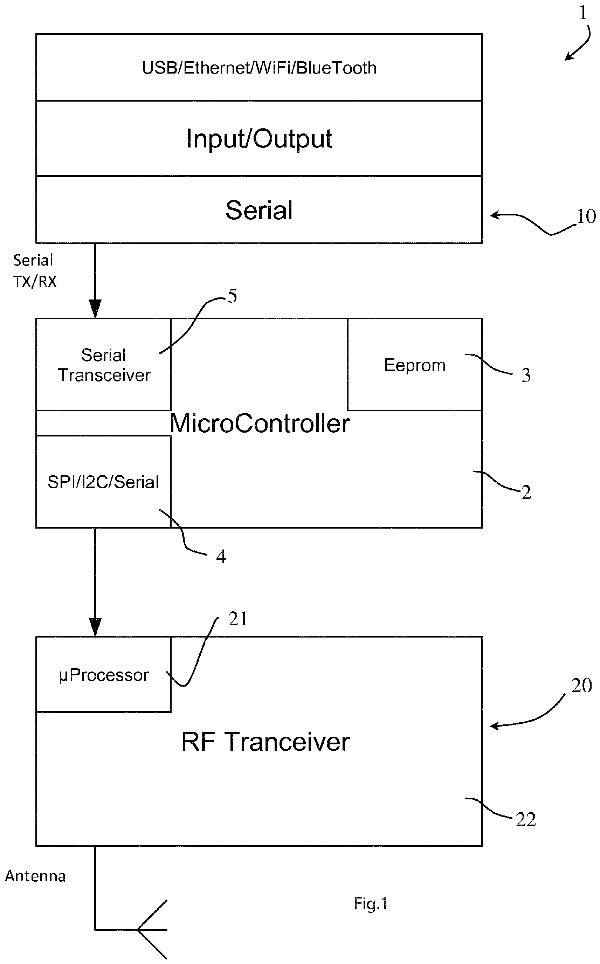

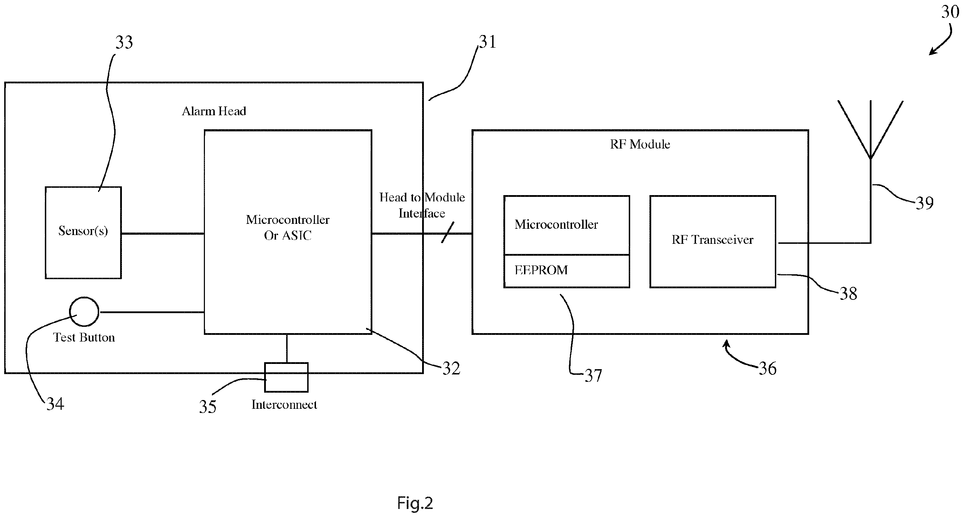

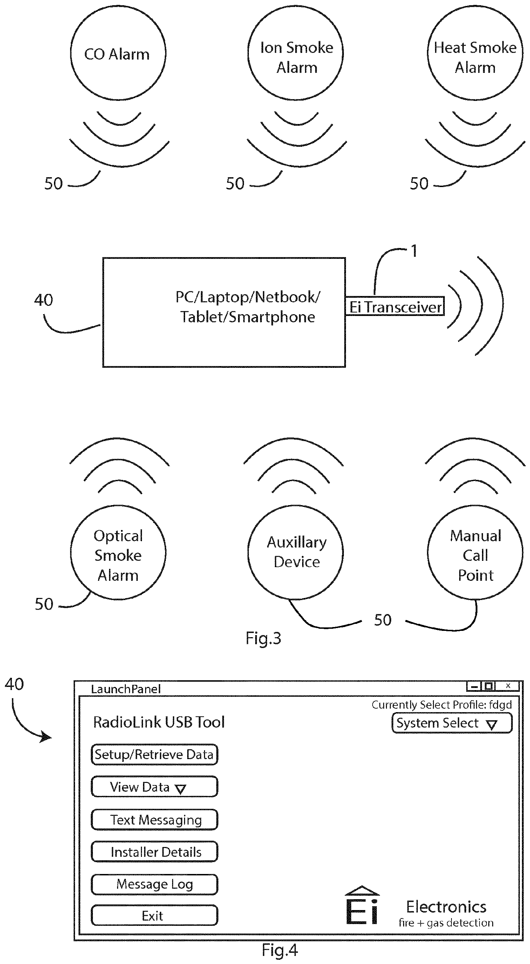

Referring to Figs. 1 to 3 a controller interface 1 is in the form of a dongle for a tablet or laptop computer or any other type of computer. The dongle 1 is a controller interface, both to the computer 40 and via RF to the alarm devices. The dongle 1 and the computer 40 are together an alarm device monitoring and control tool ("RF Tool"), used for monitoring and controlling a group of smoke alarm devices, each of which has an alarm head and RF module combination 30, one of which is shown in Fig. 2. Fig. 3 shows an overall group, with the controller interface 1 connected to a computer 40, and the alarm devices are indicated by the numeral 50.

The controller interface 1 comprises a microcontroller 2 with EEPROM 3, and serial transceivers 4 and 5. There is a CC1101 RF transceiver 20 with a microprocessor 21 and main logic 22, linked with an antenna 23. The interface 1 also comprises an input/output USB serial interface which plugs into the portable device.

Each alarm head 31 has a microcontroller 32 (or, in other embodiments, an ASIC), sensors 33, a test button 34, and an (optional) interconnect (wired) port 35. The microcontroller 32 is linked by a physical bus to an RF module 36 with a microcontroller 37 and an RF transceiver 38 linked with an antenna 39. These are used for receiving commands from the RF Tool 1/40, such as Locate, Silence, Test, Download, and Sound Horn messages.

The devices 50 can, with the circuitry 30, store event data indefinitely without presence of a controller or "panel". However, the RF Tool 1/40 can be introduced by for example being brought by a technician doing a regular check-up or responding to a fault. This avoids need to have a permanent panel. The data is residing in the alarm devices and does not need a separate computer/gateway to record it, but yet it is there if there is an issue and the data is needed. It is particularly advantageous that the devices store in a non-volatile memory data including event history data with the time of last event and signal strength data. Such storage in non-volatile memory provides the advantage that a dedicated monitoring panel is not required, and also that the usefulness and relevance of the data is much greater than if it were monitored by such a panel. This is because the data is monitored and captured in real time by the devices, and is directly representative of the real situation.

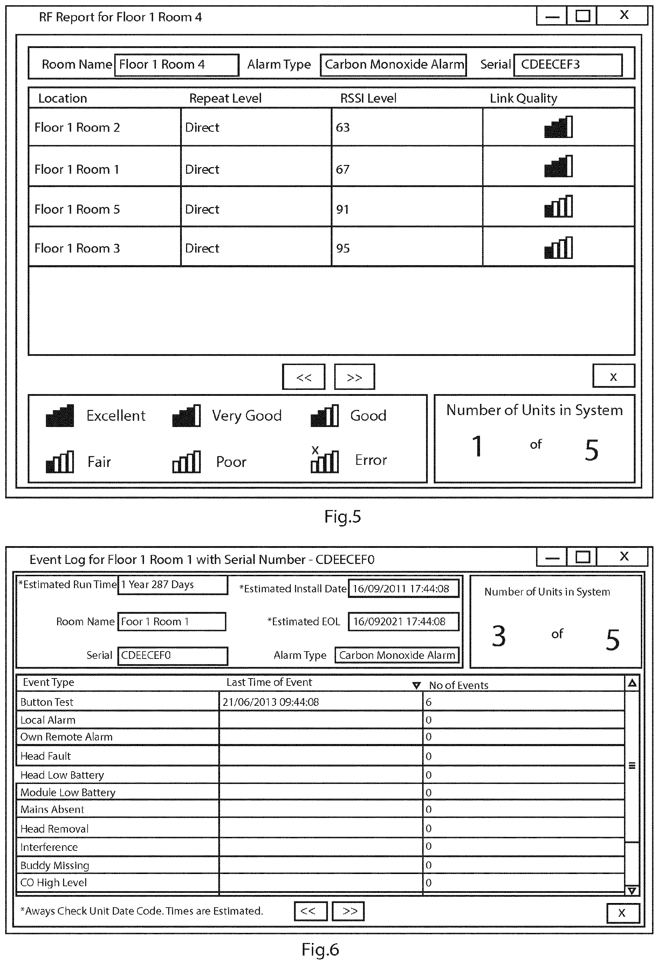

The computer 40 is programmed with software uploaded from the dongle 1 or over the Web and it generates useful displays for the user in managing the various devices 50 in the group. Fig. 4 shows the main menu, Fig. 5 shows a sample report for a part of the alarm group, and Fig. 6 shows a sample event log. It will be appreciated that these are very useful sets of information for both users and installers. These are examples of the comprehensive extent of data which can be gathered and made available even though the alarm devices do not have user interfaces.

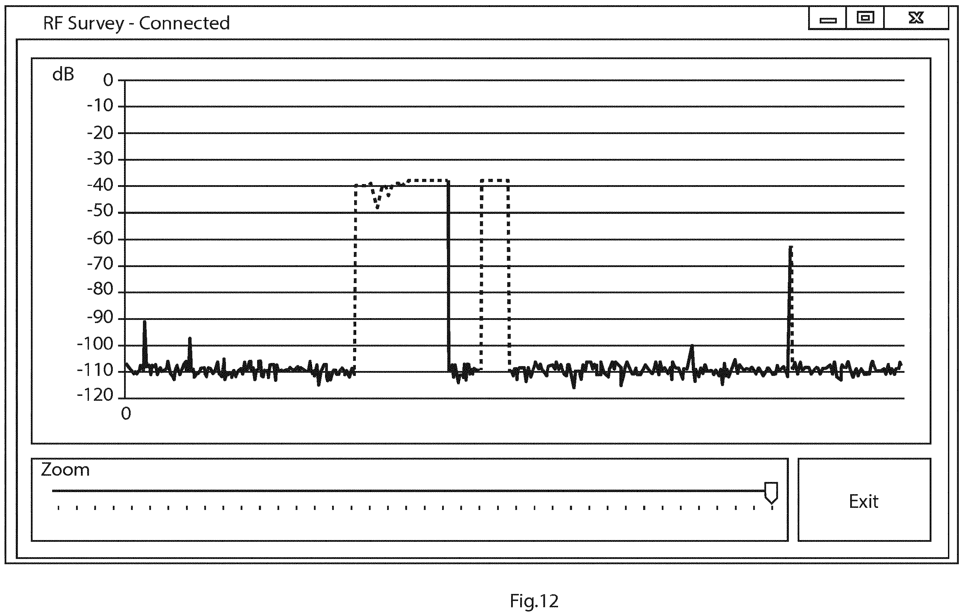

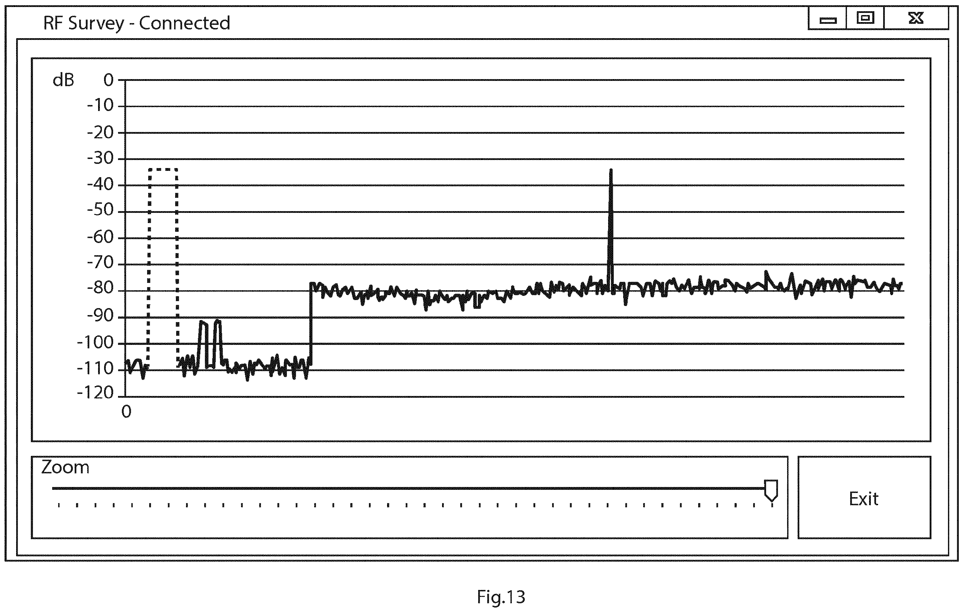

The dongle 1 and the computer 40, in an "Interference Meter" mode can be configured to continuously sample the RF signals in the band (868.5 MHz) that is used by the alarm devices 50. It is displayed as a continuously scrolling graph, somewhat like an oscilloscope trace. Examples are shown in Figs. 12 and 13. If there are interference sources present, they can be identified by moving the interference nearer them as signal strength will be seen to rise. Advantageously, the RF Tool processes together the received signal strength and repeat level data in the event data in the directly monitored interference to provide useful outputs. This processing can contribute to generating the plots of \Figs. 23 and 13.

The computer 40 is programmed to generate an output for the user indicating that if an interference source is present, then due to the measured strength of its interference, it must be located say at least 2 metres from any other device 50. The following is a sample table.

| RF signal Strength to be detected | Distance from interference source generating -90 dB at 3 meters |
|---|---|
| -90 dB | 4m |
| -80 dB | 3m |
| -70 dB | 2m |
| -60 dB | 1m |
| -50 dB | 0.5m |

With stronger interference sources the distances will need to be longer and vice versa.

The alarm device head 30 stores useful information in its EEPROM, using only a small number of bytes. The data includes RSSI (Receive Signal Strength Indication) signal strengths and repeat levels, from all the other devices in the system. The interface 1 receives this data wirelessly and processes it to generate useful user information and also control signals for the device. The user outputs include SMS messages to user mobile phones.

Events are time-stamped by each device 50 according to its own relative clock. The relative clock data includes a count value from the last reset, and the controller 40 is programmed to automatically translate this to real time. Also, the computer 40 is programmed to process the event log data to show the effective quality of the alarm with respect to the battery condition. In the case of an optical alarm this data includes the level of sensor chamber contamination and so allows prediction of the risk of device failure over the following maintenance period(s). The ability of the controller 40 to automatically interpret and transmit onwards, the downloaded data, avoids need for the alarm devices to have relatively complex functionality such as GSM and computing capability. Also, at installation, the controller logs the device unique identifiers and this data can be uploaded to a server for management such as asset management.

All of this is achieved without need for additional components in the alarm devices; existing microcontroller and RF hardware components are used.

Each alarm device 50 comprises physically a base which is either battery powered or wired to the mains. The head plugs onto the base for physical support and to receive battery or mains power. Thus, the circuit can be repaired or upgraded if necessary by simply disconnecting it from the base. Also, it can be easily removed if a high-voltage test ("Megger" test) is being performed on the house mains wiring.

After the group of alarm devices has been house-coded the user inserts the dongle 1 into a computer such as a laptop or other user device and loads the associated software. The screen will now show "Test Button Message received from XX Alarm". The user selects device type from the following drop-down menu:
- Smoke Alarm Optical
- Smoke Alarm Ionisation
- Heat Alarm
- Carbon Monoxide Alarm
- Manual Call Point
- Auxiliary Device

The user then selects the location which most closely describes where the alarm is located or chooses a double digit number such as 2-5 (which could indicate 2^{nd} storey, 5^{th} Smoke Alarm; e.g. numbered going clockwise from the front of the building. The options for alarm device locations include for example:
Hallway Downstairs, Hallway Upstairs, Attic, Kitchen, Dining Room
- 0-1, 0-2, 0-3, 0-4, 0-5, 0-6, 0-7, 0-8, 0-9, 0-10
- 1-1, 1-2, 1-3, 1-4, 1-5, 1-6, 1-7, 1-8, 1-9, 1-10
- 2-1, 2-2, 2-3, 2-4, 2-5, 2-6, 2-7, 2-8, 2-9, 2-10
- 3-1, 3-2, 3-3, 3-4, 3-5, 3-6, 3-7, 3-8, 3-9, 3-10
- A, B, C, D, E, F, G, H, I, J, K, L, M, N, O, P, Q, R, S, T, U, V, W, X, Y, Z
-

One byte is dedicated to this, giving 255 locations. The above is an example of identifiers that could be used.

The screen will then show
"Download complete for this Alarm"

The type of device (e.g. Carbon Monoxide alarm) and the location (e.g. attic) are stored in the device head 30, with a simple scheme requiring very little memory. A look-up table assigns the locations to these simple numbers.

Even though they have little storage capacity, each alarm device 50 stores information such as an event log, radio survey data, device type and location. In say the 1% of cases where there are problems requiring detailed investigation and troubleshooting, a technician can use the RF Tool to get the required information from each unit. Also, when devices are returned with complaints such as "it is always going off" the event log and location information can be downloaded to confirm or deny the complaint. Similarly, after a fire event, data can be downloaded to confirm that the devices actually did alarm.

A further benefit is that with RF mesh networks that are not in direct range of a panel or other data recording device, it can be impossible to get the information back, without turning on intermediary devices to act as repeaters - this is often not feasible with devices powered with batteries, due to problems with battery life due to excessive usage).

The screen will now show a box with
Number of Alarms Setup/Downloaded 1
This is Device 5 and its System has 12 devices

The computer 40 assigns an arbitrary number to each device 50. In this example the first device button tested has been assigned the number 5, and this unit is house coded to 12 devices. The user then progresses to the next alarm device and does the same actions, as follows.

Referring again to Fig. 4 the main menu options are as follows.

Setup New System: This option is used to launch a window which is used to set up a new system (alarm group). From here the user will button test each compatible device and download data from it. The user can also assign a room name and alarm type to each device. The computer 40 then generates a summary screen which allows the user to access other information built from the downloaded data.

View Data: This option will let a user load up a previously set up system. The user will be presented with the summary screen using data already downloaded from a previous system setup. The user can refresh the event log and RF data. The user can then save another snapshot from that system. The user can load any snapshot taken of that system. The user must have selected the system using the *system select* button previous to this step.

Text Messaging: This option launches the text messaging application, which monitors for any 868.5Mhz messages using the transceiver. When a message from a known serial number of the selected system is received, the text messaging application can act on it e.g. send a text, email, for example.
Installer Details: An installer can enter his contact and company details here.
Message Log: This records all RF messages received by the RF Tool. It is to be used by installers/technicians for troubleshooting the system. Examples are illustrated in Fig. 6.
System Select: This option will select a previously created system profile. It allows text messaging to launch and also allows previous snapshots of the system to be accessed.

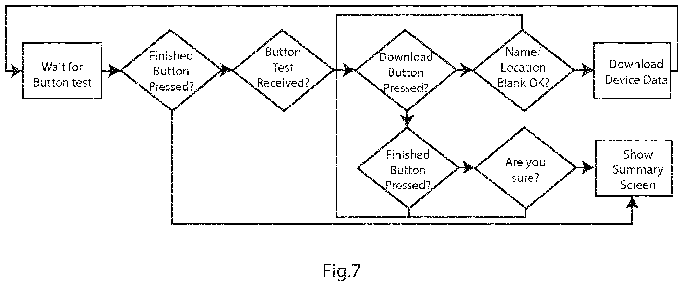

The system set-up is shown in more detail in Fig. 7, in which there is iterative downloading of data from each device 50. When it has all been downloaded the computer 40 generates a summary report. The user pushes the test button on a device, resulting in an RF test message being transmitted from that alarm device, which the interface 1 receives and this activates the interface 1 to download the event log from the device.

The user may be instructed to button test a device, causing the device 50 to transmit the device's serial number which is used to download its stored data. A command is downloaded to the alarm device, instructing the device what areas of memory are to be downloaded. The device will then respond with a series of messages containing the payload. This payload size is only limited by the amount of memory available in the device. When the data payload has been delivered, an upload termination message is sent to tell the device that the download is complete.

When a button test is received, the user then selects a room or other location name and an alarm type from the dropdown menu. The user now clicks download which initiates a download of data from the device.

The above steps are repeated until the memory from each unit has been downloaded to the RF Tool. After the first alarm has had its data downloaded, the application can characterise the system topology. From the serial numbers it can recognise different types of device, such as a CO alarm or a smoke alarm. The alarms also store their alarm type and location.

When the download completes, a button will appear to continue on to the next device. The user can repeat this process until data from every device in the system has been downloaded or they have downloaded data from only the devices they need.

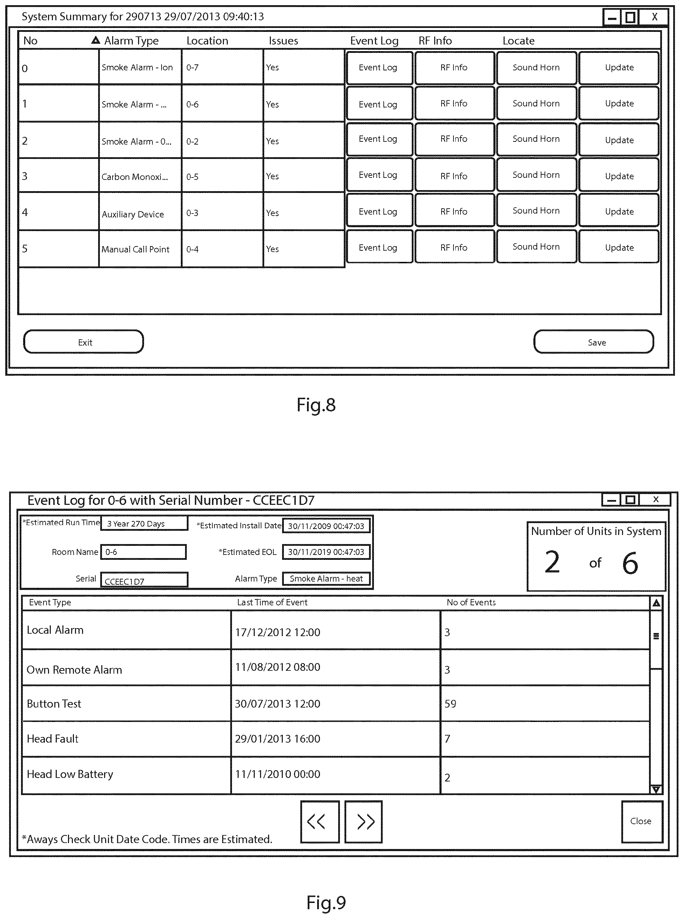

After data downloading, a summary screen similar to Fig. 8 is displayed to the user. This displays a brief overview of data obtained from the devices in the system. From here the user can do the following:

| | |
|---|---|
| View the Event Log: | This will display the devices' event log. |
| View the RF Information: | This will display the RF analysis. |
| Sound the Devices Horn: | This is used when searching for a particular device. |
| Update Device Data: | This will re-download all data for a specific device. |
| Save: | This will save all downloaded data to a file. The user can bring this screen up again at any time by loading this data. These saved files are a user profile that can be used for other features also such as monitoring and control. |

Referring to Fig. 9 the event log provides information regarding particular events that are recorded in each of the devices. These events are stored in each device individually (to an accuracy of +/- 2 hours) and still exist after the download process has finished.

Fig. 9 shows an example of an event log downloaded from a device. From this data the user can learn about how the device has been behaving, about any issues the device has encountered or if the device is near or past its end of life date. This RF report details the connection quality of each alarm device to each other device. The repeat level to each other device is also displayed, which indicates whether there is a direct connection or how many hops the device must go through to have a direct connection. Also displayed is the RSSI (Received Strength Signal Indicator) value, used to determine whether or not the connection between any two given devices is sufficient. There is also a method of determining if a device 50 has more than one path to any other device 50. The computer 40 indicates that there is a path by ticking the multipath field in the column to a specific device.

A user can click on *'view data'* (shown in figure 4) to bring up a list of dates the current system has had its data downloaded on. Double-clicking a date here will display the *System Summary* window with data from that date associated with it. From the summary window a user can re-download data for each device and also bring up an updated event log. When the user clicks the save button they will update the current selected profile with a new snapshot from that time and date.

The text messaging service runs in the background. This means it is only operational when the computer 40 is on and the dongle 1 is connected (i.e. not in power saving mode). The application will minimise to notify the user via the system tray if any unit sends an RF message such as low battery mode/alarm/test mode.

If a fire or button test is detected from any device 50 that has been house coded/learned in the previous steps, it will send a text message to a specified destination. The text message will also notify the user about alarms and fault condition(s), the type of device, the area where it has occurred in, the address of the premises where it is located and the time and date. This feature can be used to verify that all alarms can send text messages and that they are in communication with the computer. However, the user may have to wait up to five minutes between button tests with large systems, due to messages being repeated.

### Downloading Radio Survey and Event Log Data from Alarms

To update the "RF Survey Data" the user then puts all the units into house code for at least ten minutes with systems of up to six alarms, fifteen minutes for twelve alarms and thirty minutes for larger systems. The dongle 1 can put all of the units into house code to facilitate this - the user on start Menu clicks on Test,. Locate, Hush Alarms and clicks on "Put System Devices into House Code".

After the download is complete a summary table with the following information appears. Also, and example screen shot is shown in Fig. 8.

### Summary Data Log

| Device No. | Device Type | Location | Issues | Event Log | RF Survey | Press To Locate |
|---|---|---|---|---|---|---|
| 1 | Smoke Alarm Opt | Downstairs Hallway | No | Download | Download | □□□ |
| 2 | Smoke Alarm Opt | Upstairs Hallway | No | " | " | □ |
| 3 | Smoke Alarm Ion | Bedroom 1 | No | " | " | □ |
| 4 | Heat Alarm | Kitchen | No | " | " | □ |
| 5 | CO Alarm | Kitchen | No | " | " | □ |
| 6 | Auxiliary Device | Kitchen | No | " | " | □□□ |
| 7 | Smoke Alarm Opt | Bedroom 2 | Yes | GG | " | □ |
| 8 | Smoke Alarm Opt | Attic | No | " | " | □ |
| 9 | CO Alarm | Living Room | No | " | " | □ |
| 10 | Heat Alarm | Garage | No | " | " | □ |
| 11 | Auxiliary | Garage | No | " | " | □ |
| 12 | Manual Call Point | Downstairs Hallway | No | " | " | □ |

### Radio Survey Data to Confirm or Improve Communication Reliability

The user clicks on the main menu, clicks on "Alarm Data Download", and selects the data required. If the data needs to be downloaded (and/or updated) the user follows the steps above. This shows summary data similar to that in the table above.

### Alarm 1: Smoke Alarm Optical Hallway Downstairs2:15; 19 July 2013

| Device No. | Device Type | Signal Strength | Repeat Level | Location | Multipath |
|---|---|---|---|---|---|
| 1 | | - | - | Downstairs Hallway | - |
| 2 | | )))) | Direct | Upstairs Hallway | yes |
| 3 | | )))) | Direct | Bedroom 1 | yes |
| 4 | | )))) | Direct | Kitchen | yes |
| 5 | | )))) | Direct | Kitchen | yes |
| 6 | | ))) | Direct | Kitchen | yes |
| 7 | | ))) | Direct | Bedroom 2 | yes |
| 8 | | ) | Direct | Attic | yes |
| 9 | | )) | Direct | Living room | yes |
| 10 | | Rpt | 2 Repeats | Garage | yes |
| 11 | | Rpt | 2 Repeats | Garage | yes |
| 12 | | ) | Direct | Downstairs Hallway | yes |

| | | Margin |
|---|---|---|
| )))) | Excellent | > 30dB |
| )))) | Very Good | 20-30dB |
| ))) | Good | 10-20dB |
| )) | Fair | 5-10dB |
| ) | Poor | 1-5dB |
| X | | 0dB |
| Rpt | Repeated by another device. | |

The controller 1/40 can be used to inform the user if a unit has a multiple path as follows.

In the house coding mode over about 15 to 30 minutes, the units transmit their house codes so others can identify the serial numbers of the units in the system. For the first 5 minutes each unit just transmits its own house code, with part of the message indicating that it is an original message i.e. it is information that is being repeated. It stores the serial numbers, RSSI signal strengths at which it received the different messages. (The multiple direct message RSSIs received from a single device are averaged for greater accuracy and reliability).

Following this, a device 50 now transmits the house code numbers it has learned (in the previous 5 minutes of the house code mode), and tags these as being at repeat level 1. If it learns a new serial number during this mode, it is tagged with repeat level 1, it records both the serial number and the repeat level (but not the RSSI level). Similarly it stores any serial numbers and repeat levels received, at repeat level 2 and repeat level 3. Now when the Radio Survey data is being downloaded it gives:
- all the serial numbers,
- the RSSI levels of those received directly,
- the repeat level of those not received directly.

From this data the RF Tool can deduce if a unit has multiple paths, and so fills in the "MultiPath" column appropriately.) Sample screens are shown in Fig. 5.and 10

### Checklist

The RF Tool 1/40 performs the following checks.
1. Check in the "Signal Strength" column that there are no "X" s indicating 0 dB i.e. no connection..
   (This could occur if say there are 12 units in the system, but this device has only learned 11 serial numbers i.e. it did not hear one).
2. Check in the "Signal Strength" column that all units are ")))" i.e. "Good" or better. If a communication path is "))" Fair or ")" poor for direct communication, the user will need to confirm that there is an adequate repeat path through another unit.
   The user now checks the RF communication paths of all the other alarms (in the example 2 to 12) similarly. If there are any weak or non-existent RF links the user will need to provide inputs to follow the troubleshooting procedure given with the alarms (e.g. this usually means adding another RF unit to act as a repeater, or re-orientating/moving one or more units).

The RF signal strengths are measured during the house coding. The computer leaves the house coding on for at least 10 minutes to get a more accurate set of signal strengths (by averaging). When the monitoring is enabled the signal strengths are updated every time a monitoring message is received and also every time a test button message is received from another unit.

The EEPROM in a given device, say device_4 for illustration purposes, stores the average of 5 RSSI levels at which it has received messages from another particular unit, say device_7. Now, when device_4 receives a new message from device_7, it measures the new RSSI level, and updates the average to include the new data. One way to do this is to multiply the old average by four, add in the new RSSI value and divide by 5. In this way a running average is generated. So, intermittent, very strong or weak RSSIs (which may be due to somebody walking into the RF path, or an interference of some kind) will not change the average too much.

During the yearly maintenance check, if there has been a monitoring failure or if there is concern about the RF reliability the user can use the computer to put all units into house code mode using the dongle, and leaves them in this mode for at least 15 minutes to get a new accurate set of up to date signal strengths.

### Using the Event Log Data for Maintenance and Troubleshooting

The user clicks on the main menu, clicks on "Alarm Data Download", and selects the last data download. A summary table is displayed with data as shown below.

### Event Log

Device No. 1
Smoke Alarm Optical;
Hallway Downstairs (data taken 2:15; 19^{th} June 2013)
Alarm Powered: 5.64 Years
Estimated Life remaining to 10 years: 4.36 years (i.e. date September 2017) (Also check date on "Replace by" label on unit, is not before this).

| **Event** | **Last Time of Event** | **Number of Events** | **Condition** |
|---|---|---|---|
| Alarm | 19/06/2013; 6.00 | 2 | |
| Button Test | 12/06/2013; 14:00 | 172 | |
| Low Batty Alarm | | 0 | |
| Low Battery RF | | 0 | |
| Head Removal from Mounting Plate | | | |
| Monitored Device missing | | 0 | |
| Interference(for 30 seconds) | | 0 | |
| (30 sec) | | | |
| Interference during Installation | | 0 | |
| For CO Alarms | | | |
| Alarm >150ppmCO | | 0 | |
| Alarm > 90ppmCO | | 0 | |
| Alarm > 45ppmCO | | 0 | |
| CO Detected >30ppmCO for >2 hours | | 0 | |
| CO Detected >30ppmCO for >30 min | | 0 | |
| Battery V (Alarm) | | | 10 |
| Battery V (RF Module) | | | 10 |
| Contamination Level | | | 10 |
| Peak CO level | | 0 | |

Sample screens are shown in Figs. 6 and 9.

### Computer Event Log

The computer 40 may be set to retain a file of all the RF messages the computer has received, as below. All of the button tests on installation could be around the start of the file. This has much more accurate timing than the Event log. If it becomes excessively long it could be limited to say 100 events with the oldest events being overwritten.

### Event log up to 8:30 am 28 July 2013.

| Device No. | Device Type | Location | Event | Time | Date | RF Signal Strength to EiUSB 1 |
|---|---|---|---|---|---|---|
| 1 | Smoke Alarm Opt | Downstairs Hallway | Alarm | 8:30:15 am | 28 June 2013 | -60 |
| 2 | Smoke Alarm Opt | Upstairs Hallway | Button Test | 7:03:35 pm | 24 June 2013 | □)) -75 |
| 3 | Smoke Alarm Ion | Bedroom 1 | Low Battery | " | " | -75 |
| | Notebook On | | | 6:00:00 pm | 23 June 2013 | |
| | Notebook Off | | | 3:05:34 | 1 April 2013 | |
| 6 | Auxiliary Device | Kitchen | Button test | 2:37:37 pm | 30 March 2013 | -75□ |
| 12 | Smoke Alarm Opt | Hallway downstairs | Sent Alarm Text Message | 4:05:17 am | 15 March 2013 | -75 |
| 12 | Smoke Alarm Opt | Hallway downstairs | Alarm | 4:04:30 | 15 March 2013 | -60 |

### Serial number table

The actual serial numbers are made available for identification unique purposes (e.g. to relate a particular alarm to a particular property, in a particular location; for example for asset tracking)

### Engineer's Mode

The computer may have features and/or commands that are limited to knowledgeable competent persons. They might require the use of a code that could be supplied (they could all be the same e.g. 4711, or they could be a code based on the date code of the product, and/or they could be supplied on a slip of paper.

The engineer, clicks on say "System Select" icon from the start menu. On this screen there will be an "Engineer's Mode". Clicking on this will bring up a screen, requesting a password. If the password is successfully entered, a list of options such as those below will be made available.

Commands that are only accessible here include
- Put all units into house code mode,
- Take all units our of house code mode,
- Get the system to start monitoring i.e. to form "buddies,
- Later give the option of increasing the monitoring timing e.g. from weekly, to daily, to every X hours. at the expense of battery life
- Later on silence a unit in alarm "permanently" by sending out a message that would only be acted on by the unit to be silenced (ASIC units could be silenced by sending a new specific Hush message for that unit specifically every 10 minutes to keep it in Hush).
- Test All units - a "global 3.5 second repeated message" would be sent out to tell each unit to "press its Test button", they would then all in turn (in the same way as the alarms are handled so there is no clashing) sound their horns and send out the RF test button message. The Windows device would record the RF messages confirming they are all operational and in RF communication.
- Change the dongle sampling time from every 2.5 seconds (?) to every 20 mS so it can pick up low battery and other short messages that are in direct range (The current drawn by the dongle and the application may be rather high for the notebook and this is a way of reducing the load on the notebook)>- The designer needs to ensure the App draws as little current as possible, especially if it is going to be left running around the clock (we might recommend a plugged in PC for this; it would also help ensure the dongle is always in the same place and hopefully stay in range, after being initially checked.

Referring again to Fig. 1 the interface 1 can also be used to control a system. It can send any command. The main commands of interest are the Hush, Locate and Test commands. The interface 1 can behave like a standard panel, showing LEDs for errors etc.

In another embodiment the alarm monitoring and control hardware could be a separate device consisting of a microprocessor, transceiver and wireless chip that communicates via Bluetooth or over a LAN. The device could be either battery-powered or mains-powered and would be wall mountable or desktop ready. Control and interrogation of the alarms and the alarm data would be via a dedicated application downloaded to a phone, tablet, or other similar device.

In another embodiment the control device could be a dedicated panel or shared panel that controls the alarms and other wireless devices such as security alarms, HVAC, Home automation.

Another feature of the system is its use as an asset management tool that can be interrogated remotely or via a central monitoring station for alarm events, fault conditions and early warning flags such as predictive maintenance warnings via the interpretation of the alarm status on battery voltage, date installed, dust level compensation , etc. This information could be used to flag to the responsible organization for the maintenance of the devices that such devices are near alarm or in a near fault condition and replacement or service is required thus saving potential emergency callout events and costs.

In summary, the RF Tool performs the following primary functions:
Trouble-shooting existing device networks.
Diagnostics for new installations, by verifying RF signal margin, verifying that there is no RF interference by viewing signals in the 868.5 MHz band.
Verifying signals being sent and repeated, which also acts as an acknowledgement that a message has been received.
Alert notifications, with internal sound and visual messages, and text or other electronic communication messages.

In one example, if a user complains that the alarm system has alarmed previously, the following may be performed:
Open RF Tool and press "Create new system".
Create a new file name.
Press the test button on the alarm device 50 to download the alarm information.
Select the location name of the alarm device 50.
Repeat for all devices in the installation.
Press "Finish" to end and display the Summary screen.

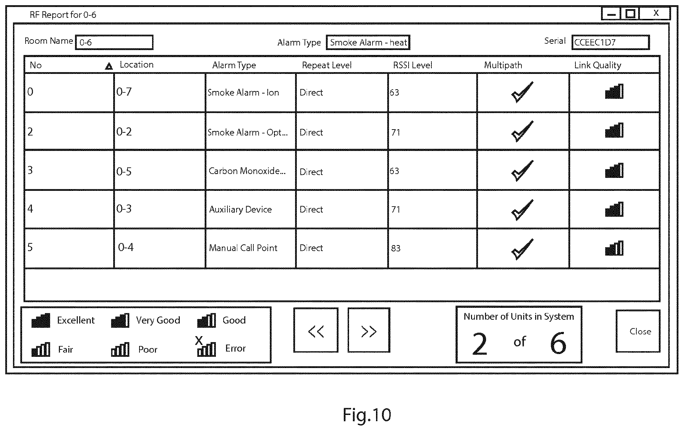

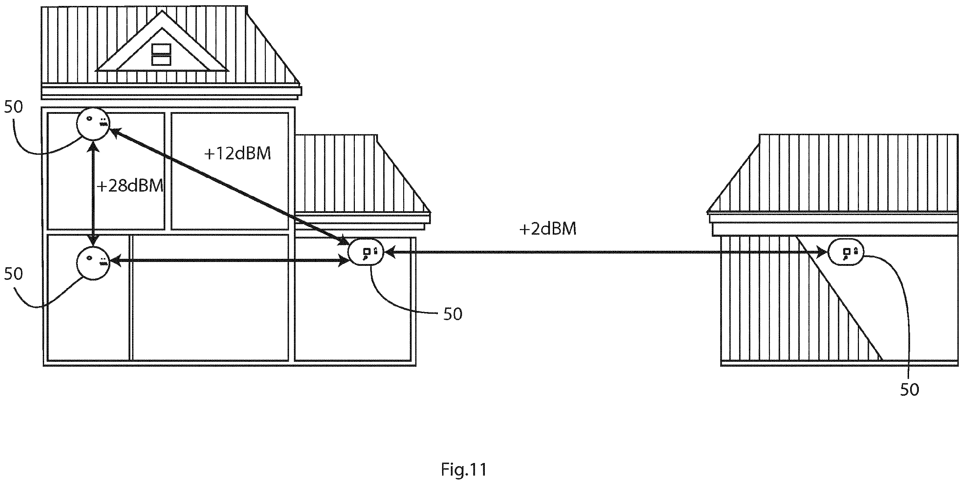

If an installer encounters difficulty in house coding the system the above procedure is repeated for all of the devices. Then, a screen such as that shown in Fig. 10 is displayed. The data captured and processed by the computer 40 is used to generate useful outputs such as the graphical image of Fig. 11. This shows the signal margin between devices at different locations in an installation.

In the "Interference Mode" described above it can generate plots such as shown in Fig. 12 to graphically illustrate the level of background RF noise (around -110dB) as compared to signals (around -40dB). Fig. 13 shows an example where the level of noise is greater about -80dB. This also shows the bone fide system RF signals and the trace changes from red (continuous line) to green (dotted line) to identify these. Fig. 13 shows an interference source turning on and the baseline level increasing form about -110 dB to about -80dB. This allows direct comparison between the wanted signals and the interference. On the trace, the wanted signal is about -33dB, so in this situation there is plenty of margin - however if the wanted signal was -90dB the communication would fail.

The invention is defined by the appended claims and is not limited to the embodiments described but may be varied in construction and detail.

## Claims

1. An alarm device monitoring and control tool (1, 40) comprising a processor (2, 40), and a radiation transceiver (20) adapted
to locally communicate with alarm devices (50) within a group, wherein
the processor (2, 40) is adapted to: generate and transmit test instructions for the devices (50); and to receive and process historical event data stored by the devices and transmitted by the devices in response to said instructions, wherein said historical event data includes:
RF signal strength data indicating RF signal strength between devices, including a Received Signal Strength Indicator value,
repeat level data measured by the alarm devices and indicating a number of hops for communication between a device and another device, and
relative time indicators for events, each said time indicator being according to a device's relative clock and including a count value from a last reset; process said historical event data to test reliability of wireless communication paths between the devices by:
processing said repeat level data to generate an indication as to whether there is a direct connection between devices or how many hops a device must go through to have a connection with each other device, and
process said RF signal strength data including a Received Signal Strength Indicator value, to determine whether or not a connection between any two devices is sufficient, and if a device has more than one path to another
device; **characterised in that** the processor (2,40) is adapted to
dynamically convert said relative time indicators in the historical event data to real time stamps; and
generate an alert if said historical event data indicates a pattern of activity which may lead to failure of a device or to an alarm event,
wherein the tool is adapted to act as an interference meter by measuring electrical noise in a reception band or bands being used by the alarm devices, and
wherein the tool is adapted to generate and display in graphical or numerical form data regarding a level of separation required between an interference source and alarm devices to ensure correct operation of said alarm devices.

2. An alarm device monitoring and control tool as claimed in claim 1, wherein the processor is adapted to maintain a map of alarm group device locations and identifiers, and to generate a display map with an interface to allow the user to select status data to access, and wherein the processor is adapted to output an alarm group snapshot status summary.

3. An alarm device monitoring and control tool as claimed in claims 1 or 2, wherein the processor is adapted to perform iterative downloading of data from each of said devices, and to recognise as a first message from a device a message sent upon user testing of the device.

4. An alarm device monitoring and control tool as claimed in any preceding claim, wherein the tool comprises a portable computer (40) and an insertable dongle (1) with the radiation transceiver (20).

5. An alarm device monitoring and control tool as claimed in any preceding claim, wherein the processor is adapted to generate and send user notifications arising from said event data processing, through a medium such as SMS or email, and wherein the processor is adapted to respond to interrogation signals from a remote host system to upload data concerning fault conditions and early warning flags such as predictive maintenance warnings.

6. An alarm device monitoring and control tool as claimed in any preceding claim, wherein the tool is adapted to process both the event data received from devices and radiation signals which it directly senses to provide an input of integrity of device-to-device communication.

7. An alarm device group monitoring method performed by a plurality of alarm devices forming a group, each device having a condition sensor, a radiation transceiver, a controller, and a non-volatile memory, and a monitoring tool (1,40) comprising a processor (2, 40), and a radiation transceiver (20) adapted to locally communicate with the alarm devices (50) within the group,
the method comprising:
each device controller storing in the non-volatile memory data including historical event data with associated RF signal strength data between devices and repeat level data measured by itself and other device controllers (50) in the group, wherein said repeat level data indicates a number of hops for communication between a device and another device, and
each device including relative time indicators in historical event data, each said relative time indicator being according to a device's relative clock and including a count value from a last device reset,
the monitoring tool wirelessly interrogating each device,
each device, in response to said interrogation, wirelessly transmitting said historical event data with associated relative time indicators,
the monitoring tool receiving said downloads of event data from the devices (50),
and processing said event data to generate user outputs including generating an indication as to whether there is a direct connection between devices or how many hops a device must go through to have a connection with each other device,
and
processing said RF signal strength event data including a Received Signal Strength Indicator value, to determine whether or not a connection between any two devices is sufficient, and if a device has more than one path to another device,
the monitoring tool dynamically converting said relative time indicators in
the historical event data to real time stamps, and the monitoring tool generating an alert if said historical event data indicates a pattern of activity which may lead to failure of a device or to an alarm event,
the monitoring tool acting as an interference meter by measuring electrical noise in a reception band or bands being used by the alarm devices, and
the monitoring tool generating and displaying in graphical or numerical form data regarding a level of separation required between an interference source and alarm devices to ensure correct operation of said alarm devices.

8. An alarm device group monitoring and control method as claimed in claim 7, further comprising the step of the monitoring tool sampling radiation signals in a frequency band used by the devices, and processing data representing said signals to act as an interference meter by measuring electrical noise in a reception band or bands being used by the alarm devices and comparing it with signal strength data in said event data.

## Patentansprüche

1. Hilfsmittel (1, 40) zum Überwachen und Steuern von Alarmvorrichtungen, umfassend einen Prozessor (2, 40) und eine Strahlungs-Sende-Empfangsvorrichtung (20), die dazu angepasst ist, mit Alarmvorrichtungen (50) innerhalb einer Gruppe lokal zu kommunizieren, wobei der Prozessor (2, 40) dazu angepasst ist:
Prüfanweisungen für die Vorrichtungen (50) zu erzeugen und zu übertragen; und als Reaktion auf die Anweisungen von den Vorrichtungen gespeicherte und von den Vorrichtungen übertragene historische Ereignisdaten zu empfangen und zu verarbeiten, wobei die historischen Ereignisdaten Folgendes umfassen:
die HF-Signalstärke zwischen Vorrichtungen angebende HF-Signalstärkedaten, umfassend einen Anzeigewert der empfangenen Signalstärke,
von den Alarmvorrichtungen gemessene Wiederholniveaudaten, die eine Zahl von Sprüngen für die Kommunikation zwischen einer Vorrichtung und einer anderen Vorrichtung angeben, und
Relativzeitanzeigen für Ereignisse, wobei jede Zeitanzeige gemäß der Relativuhr einer Vorrichtung ist und einen Zählwert seit einer letzten Rücksetzung umfasst;
die historischen Ereignisdaten zu verarbeiten, um die Zuverlässigkeit drahtloser Kommunikationswege zwischen den Vorrichtungen durch Folgendes zu prüfen:
Verarbeiten der Wiederholniveaudaten, um eine Angabe darüber zu erzeugen, ob eine direkte Verbindung zwischen Vorrichtungen vorliegt oder wie viele Sprünge eine Vorrichtung durchlaufen muss, um eine Verbindung mit jeder anderen Vorrichtung aufzuweisen, und
die einen Anzeigewert der empfangen Signalstärke umfassenden HF-Signalstärkedaten zu verarbeiten, um zu bestimmen, ob eine Verbindung zwischen zwei beliebigen Vorrichtungen ausreichend ist oder nicht, und ob eine Vorrichtung mehr als einen Weg zu einer anderen Vorrichtung aufweist; **dadurch gekennzeichnet,**
**dass** der Prozessor (2, 40) dazu angepasst ist,
die Relativzeitanzeigen in den historischen Ereignisdaten dynamisch in Echtzeitstempel umzuwandeln; und
ein Warnsignal zu erzeugen, falls die historischen Ereignisdaten auf ein Aktivitätsmuster hinweisen, das zum Ausfallen einer Vorrichtung oder zu einem Alarmereignis führen kann,
wobei das Hilfsmittel dazu angepasst ist, als Störungsmesser zu wirken, indem es elektrisches Rauschen in einem von den Alarmvorrichtungen verwendeten Empfangsband oder Empfangsbändern misst, und
wobei das Hilfsmittel dazu angepasst ist, Daten zu erzeugen und in grafischer oder numerischer Form anzuzeigen, die einen zum Sicherstellen des korrekten Betriebs der Alarmvorrichtungen erforderlichen Grad der Trennung zwischen einer Störungsquelle und Alarmvorrichtungen betrifft.

2. Hilfsmittel zum Überwachen und Steuern von Alarmvorrichtungen nach Anspruch 1, wobei der Prozessor dazu angepasst ist, einen Plan von Alarmgruppen-Vorrichtungsorten und -kennungen zu führen und einen Anzeigeplan mit einer Schnittstelle zu erzeugen, um dem Benutzer zu ermöglichen, Statusdaten auszuwählen, um darauf zuzugreifen, und wobei der Prozessor dazu angepasst ist, eine Snapshot-Statuszusammenfassung der Alarmgruppe auszugeben.

3. Hilfsmittel zum Überwachen und Steuern von Alarmvorrichtungen nach Anspruch 1 oder 2, wobei der Prozessor dazu angepasst ist, iteratives Herunterladen von Daten von jeder der Vorrichtungen auszuführen und eine bei der Benutzerprüfung der Vorrichtung gesendete Nachricht als eine erste Nachricht von einer Vorrichtung zu erkennen.

4. Hilfsmittel zum Überwachen und Steuern von Alarmvorrichtungen nach einem der vorangehenden Ansprüche, wobei das Hilfsmittel einen tragbaren Computer (40) und einen einsteckbaren Dongle (1) mit der Strahlungs-Sende-Empfangseinrichtung (20) umfasst.

5. Hilfsmittel zum Überwachen und Steuern von Alarmvorrichtungen nach einem der vorangehenden Ansprüche, wobei der Prozessor dazu angepasst ist, von der Ereignisdatenverarbeitung herrührende Benutzerbenachrichtigungen zu erzeugen und über ein Medium, wie etwa SMS oder E-Mail zu senden, und wobei der Prozessor dazu angepasst ist, auf Abfragesignale von einem entfernten Host-System zu reagieren, um Fehlerzustände und Frühwarnungs-Flags betreffende Daten, wie etwa Warnungen zu vorausschauender Instandhaltung, hochzuladen.

6. Hilfsmittel zum Überwachen und Steuern von Alarmvorrichtungen nach einem der vorangehenden Ansprüche, wobei das Hilfsmittel dazu angepasst ist, sowohl die von den Vorrichtungen empfangenen Ereignisdaten als auch Strahlungssignale, die es direkt erfasst, zu verarbeiten, um eine Eingabe der Intaktheit der Kommunikation von Vorrichtung zu Vorrichtung bereitzustellen.

7. Verfahren zum Überwachen einer Alarmvorrichtungsgruppe, das von einer Vielzahl von eine Gruppe bildenden Alarmvorrichtungen ausgeführt wird, wobei jede Vorrichtung Folgendes aufweist: einen Zustandssensor, eine Strahlungs-Sende-Empfangseinrichtung, einen Kontroller und einen nichtflüchtigen Speicher und ein Überwachungshilfsmittel (1, 40), umfassend einen Prozessor (2, 40) und eine Strahlungs-Sende-Empfangseinrichtung (20), die dazu angepasst ist, mit den Alarmvorrichtungen (50) in der Gruppe lokal zu kommunizieren,
wobei das Verfahren Folgendes umfasst:
dass jeder Vorrichtungskontroller im nichtflüchtigen Speicher historische Ereignisdaten mit zugehörigen HF-Signalstärkedaten zwischen Vorrichtungen und von ihm selbst und anderen Vorrichtungskontrollem (50) in der Gruppe gemessenen Wiederholniveaudaten umfassende Daten speichert, wobei die Wiederholniveaudaten eine Zahl von Sprüngen für die Kommunikation zwischen einer Vorrichtung und einer anderen Vorrichtung angeben, und
dass jede Vorrichtung Relativzeitanzeigen in historischen Ereignisdaten umfasst, wobei jede Relativzeitanzeige gemäß einer Relativuhr einer Vorrichtung ist und einen Zählwert seit einer letzten Rücksetzung der Vorrichtung umfasst;
dass das Überwachungshilfsmittel jede Vorrichtung drahtlos abfragt,
dass jede Vorrichtung als Reaktion auf die Abfrage die historischen Ereignisdaten mit zugehörigen Relativzeitanzeigen drahtlos überträgt,
dass das Überwachungshilfsmittel die Downloads von Ereignisdaten von den Vorrichtungen (50) empfängt,
und Verarbeiten der Ereignisdaten, um Benutzerausgaben zu erzeugen, einschließlich des Erzeugens einer Angabe darüber, ob eine direkte Verbindung zwischen Vorrichtungen vorliegt oder wie viele Sprünge eine Vorrichtung durchlaufen muss, um eine Verbindung mit jeder anderen Vorrichtung aufzuweisen, und
Verarbeiten der einen Anzeigewert der empfangen Signalstärke umfassenden HF-Signalstärke-Ereignisdaten, um zu bestimmen, ob eine Verbindung zwischen zwei beliebigen Vorrichtungen ausreichend ist oder nicht, und ob eine Vorrichtung mehr als einen Weg zu einer anderen Vorrichtung aufweist,
dass das Überwachungshilfsmittel die Relativzeitanzeigen in den historischen Ereignisdaten dynamisch in Echtzeitstempel umwandelt, und
dass das Überwachungshilfsmittel ein Warnsignal erzeugt, falls die historischen Ereignisdaten auf ein Aktivitätsmuster hinweisen, das zum Ausfallen einer Vorrichtung oder zu einem Alarmereignis führen kann,
dass das Überwachungshilfsmittel als Störungsmesser wirkt, indem es elektrisches Rauschen in einem von den Alarmvorrichtungen verwendeten Empfangsband oder Empfangsbändern misst, und
dass das Überwachungshilfsmittel Daten erzeugt und in grafischer oder numerischer Form anzeigt, die einen zum Sicherstellen des korrekten Betriebs der Alarmvorrichtungen erforderlichen Grad der Trennung zwischen einer Störungsquelle und Alarmvorrichtungen betrifft.

8. Verfahren zum Überwachen und Steuern einer Alarmvorrichtungsgruppe nach Anspruch 7, weiter umfassend den Schritt, dass das Überwachungshilfsmittel Strahlungssignale in einem von den Vorrichtungen verwendeten Frequenzband abtastet und die Signale repräsentierende Daten verarbeitet, um als Störungsmesser zu wirken, indem es elektrisches Rauschen in einem von den Alarmvorrichtungen verwendeten Empfangsband oder Empfangsbändern misst und es mit Signalstärkedaten in den Ereignisdaten vergleicht.

## Revendications

1. Outil de surveillance et de commande de dispositifs d'alarme (1, 40) comprenant un processeur (2, 40), et un émetteur-récepteur de rayonnement (20) adapté pour communiquer localement avec des dispositifs d'alarme (50) dans un groupe, dans lequel le processeur (2, 40) est adapté pour :
générer et transmettre des instructions d'essais des dispositifs (50) ; et recevoir et traiter des données d'événements historiques mémorisées par les dispositifs et transmises par les dispositifs en réponse auxdites instructions, dans lequel lesdites données d'événements historiques comportent :
des données de force de signal RF indiquant une force de signal RF entre des dispositifs, comportant une valeur d'indicateur de force de signal reçu,
des données de niveau de répétition mesurées par les dispositifs d'alarme et indiquant un nombre de sauts de communication entre un dispositif et un autre dispositif, et
des indicateurs de temps relatif des événements, chaque dit indicateur de temps se rapportant à une horloge relative d'un dispositif et comportant une valeur de compte à compter d'une dernière remise à zéro ;
traiter lesdites données d'événements historiques pour tester la fiabilité des chemins de communication sans fil entre les dispositifs en :
traitant lesdites données de niveau de répétition pour générer une indication qu'il existe ou non une connexion directe entre des dispositifs ou du nombre de sauts qu'un dispositif doit effectuer pour avoir une connexion avec chaque autre dispositif, et traiter lesdites données de force de signal RF comportant une valeur d'indicateur de force de signal reçu, pour déterminer qu'une connexion entre n'importe quels deux dispositifs est suffisante ou non, et qu'un dispositif a plus d'un chemin avec un autre dispositif; **caractérisé en ce que** le processeur (2, 40) est adapté pour convertir dynamiquement lesdits indicateurs de temps relatif dans les données d'événements historiques en estampilles de temps réel ; et
générer une alerte si lesdites données d'événements historiques indiquent une tendance d'activité susceptible de mener à une défaillance d'un dispositif ou à un événement d'alarme,
dans lequel l'outil est adapté pour faire office de compteur de brouillage en mesurant le bruit électrique dans une ou plusieurs bandes de réception utilisées par les dispositifs d'alarme, et
dans lequel l'outil est adapté pour générer et afficher sous forme graphique ou numérique des données concernant un niveau de séparation requis entre une source de brouillage et des dispositifs d'alarme afin d'assurer un fonctionnement correct desdits dispositifs d'alarme.

2. Outil de surveillance et de commande de dispositifs d'alarme selon la revendication 1, dans lequel le processeur est adapté pour tenir à jour une carte d'emplacements et d'identifiants de dispositifs de groupe d'alarme, et générer une carte d'affichage avec une interface pour permettre à l'utilisateur de sélectionner des données d'état à solliciter, et dans lequel le processeur est adapté pour produire en sortie un résumé des états instantanés de groupe d'alarme.

3. Outil de surveillance et de commande de dispositifs d'alarme selon les revendications 1 ou 2, dans lequel le processeur est adapté pour exécuter un téléchargement itératif de données depuis chacun desdits dispositifs, et reconnaître comme premier message d'un dispositif un message envoyé lors d'un essai par l'utilisateur du dispositif.

4. Outil de surveillance et de commande de dispositifs d'alarme selon l'une quelconque des revendications précédentes, dans lequel l'outil comprend un ordinateur portable (40) et une clé électronique insérable (1) dotée de l'émetteur-récepteur de rayonnement (20).

5. Outil de surveillance et de commande de dispositifs d'alarme selon l'une quelconque des revendications précédentes, dans lequel le processeur est adapté pour générer et envoyer des notifications d'utilisateur résultant dudit traitement de données d'événements, par le biais d'un support tel que SMS ou courriel, et dans lequel le processeur est adapté pour répondre à des signaux d'interrogation d'un système hôte distant pour charger en amont des données concernant des états de défaillance et des fanions d'avertissement précoce tels que des avertissements de maintenance prédictive.

6. Outil de surveillance et de commande de dispositifs d'alarme selon l'une quelconque des revendications précédentes, dans lequel l'outil est adapté pour traiter à la fois les données d'événements reçues depuis des dispositifs et des signaux de rayonnement qu'il détecte directement pour fournir une entrée d'intégrité de la communication de dispositif à dispositif.

7. Procédé de surveillance de groupe de dispositifs d'alarme exécuté par une pluralité de dispositifs d'alarme formant un groupe, chaque dispositif ayant un capteur d'état, un émetteur-récepteur de rayonnement, une unité de commande, et une mémoire non volatile, et un outil de surveillance (1, 40) comprenant un processeur (2, 40), et un émetteur-récepteur de rayonnement (20) adapté pour communiquer localement avec les dispositifs d'alarme (50) dans le groupe,
le procédé comprenant :
la mémorisation par chaque unité de commande de dispositif dans la mémoire non volatile de données incluant des données d'événements historiques avec des données de force de signal RF associées entre des dispositifs et des données de niveau de répétition mesurées par elle-même et d'autres unités de commande de dispositifs (50) dans le groupe, dans lequel lesdites données de niveau de répétition indiquent une nombre de sauts de communication entre un dispositif et un autre dispositif, et
chaque dispositif comportant des indicateurs de temps relatif dans les données d'événements historiques, chaque dit indicateur de temps relatif se rapportant à une horloge relative d'un dispositif et comportant une valeur de compte à compter d'une dernière remise à zéro de dispositif,
l'interrogation en mode sans fil de chaque dispositif par l'outil de surveillance,
la transmission en mode sans fil par chaque dispositif, en réponse à ladite interrogation, desdites données d'événements historiques avec des indicateurs de temps relatif associés,
la réception par l'outil de surveillance desdits téléchargements de données d'événements depuis les dispositifs (50),
et le traitement desdites donnés d'événements pour générer des sorties d'utilisateur comportant la génération d'une indication qu'il existe ou non une connexion directe entre des dispositifs ou du nombre de sauts qu'un dispositif doit effectuer pour avoir une connexion avec chaque autre dispositif, et
le traitement desdites données d'événement de force de signal RF comportant une valeur d'indicateur de force de signal reçu, pour déterminer qu'une connexion entre n'importe quels deux dispositifs est suffisante ou non, et qu'un dispositif a plus d'un chemin vers un autre dispositif,
la conversion dynamique par l'outil de surveillance desdits indicateurs de temps relatif dans les données d'événements historiques en estampilles de temps réel, et
la génération par l'outil de surveillance d'une alerte si lesdites estampilles de temps réel indiquent une tendance d'activité susceptible de mener à une défaillance d'un dispositif ou à un événement d'alarme,
le fonctionnement de l'outil de surveillance en tant que compteur de brouillage en mesurant le bruit électrique dans une ou plusieurs bandes de réception utilisées par les dispositifs d'alarme, et
la génération et l'affichage par l'outil de surveillance sous forme graphique ou numérique de données concernant un niveau de séparation requis entre une source de brouillage et des dispositifs d'alarme afin d'assurer un fonctionnement correct desdits dispositifs d'alarme.

8. Procédé de surveillance et de commande d'un groupe de dispositifs d'alarme selon la revendication 7, comprenant en outre l'étape d'échantillonnage par l'outil de surveillance de signaux de rayonnement dans une bande de fréquences utilisée par les dispositifs, et le traitement de données représentant lesdits signaux pour faire office de compteur de brouillage en mesurant le bruit électrique dans une ou plusieurs bandes de réception utilisées par les dispositifs d'alarme et le comparant à des données de force de signal dans lesdites données d'événement.
